**Europäisches Patentamt**

**European Patent Office**

**Office européen des brevets**

(11) Veröffentlichungsnummer: **0 229 345 B1**

(12) **EUROPÄISCHE PATENTSCHRIFT**

(45) Veröffentlichungstag der Patentschrift:
**15.03.89**

(51) Int. Cl.⁴: **F16L 59/16**

(21) Anmeldenummer: **86117474.6**

(22) Anmeldetag: **16.12.86**

(54) Vorrichtung zum elastischen Verbinden zweier Mantelrohrleitungen.

(30) Priorität: **02.01.86 DE 3600028**

(43) Veröffentlichungstag der Anmeldung:
**22.07.87 Patentblatt 87/30**

(45) Bekanntmachung des Hinweises auf die Patenterteilung:
**15.03.89 Patentblatt 89/11**

(84) Benannte Vertragsstaaten:
**AT BE CH DE FR GB IT LI NL SE**

(56) Entgegenhaltungen:
**EP-A- 0 044 468**
**EP-A- 0 123 944**
**WO-A-81/01184**
**DE-A- 1 450 415**

(73) Patentinhaber: **Witzenmann GmbH**
**Metallschlauch-Fabrik Pforzheim, Östliche**
**Karl-Friedrich-Strasse 134, D-7530 Pforzheim(DE)**

(72) Erfinder: **Buchauer, Franz, Schauinsland 71,**
**D-7530 Pforzheim(DE)**
Erfinder: **Kiesow, Hans-Jürgen, Dr., Bruchkamp 4,**
**D-3014 Laatzen(DE)**
Erfinder: **Müller, Hanspeter, Karl-Möller-Strasse 42,**
**D-7535 Königsbach-Stein(DE)**

(74) Vertreter: **Lemcke, Rupert, Dipl.-Ing. et al,**
**Patentanwälte Dipl.-Ing. R. Lemcke Dr.-Ing. H.J.**
**Brommer Bismarckstrasse 16 Postfach 4026,**
**D-7500 Karlsruhe 1(DE)**

## Beschreibung

Die Erfindung betrifft eine Vorrichtung zum elastischen Verbinden zweier mit einer Wärmeisolierung versehener Mantelrohrleitungen mittels eines zwischen den beiden Rohrenden angeordneten, wenigstens einen Metallbalg aufweisenden Kompensators mit einem diesen und die Rohrenden umbebenden Gehäuse, dessen Innenraum gegen Zutritt von außen über in den Gehäuseenden angeordnete Dichtungsringe in auf dem Mantel der Rohrleitungen verschiebbar geführter Weise abgedichtet ist, sowie einer wenigstens den Kompensator umgebenden, wärmeisolierenden Umhüllung aus Kunststoff oder dergleichen.

Derartige mit einer Wärmeisolierung für beispielsweise aus Polyurethanschaum versehene Mantelrohrleitungen mit einem Mantel aus Metall oder Kunststoff, beispielsweise Polyethylen, finden insbesondere in der Fernheizungstechnik Verwendung und werden dabei in der Erde verlegt. .Hierzu wird hingewiesen auf die EP-A 44 468. Zur Aufnahme der wärmedehnungsbedingten Bewegung der Rohrleitung ist es bekannt, diese in thermisch vorgespannter Weise mit dem Erdreich zu fixieren, um die Verwendung von Rohrleitungskompensatoren zu erübrigen. Solche thermisch vorgespannten Systeme bergen jedoch eine Reihe von Unsicherheiten in sich, indem die Fixierung im Erdreich nicht mit ausreichender Sicherheit möglich ist oder später eine Beeinträchtigung erfahren kann, wie dies beispielsweise durch eine in der Nähe der Rohrleitung errichtete Baustelle und die damit einhergehende Fortnahme des Erdreiches möglich ist. Daher richtet sich die Erfindung auf die Fälle im Erdreich verlegter Rohrleitungen, bei denen man sich nicht auf die beschriebene Funktion des Erdreiches verlassen, vielmehr die gegenseitige Bewegung zweier Rohrleitungsabschnitte durch zwischengeschaltete Kompensatoren mit wenigstens einem Metallbalg zulassen will.

Solche Kompensatoren lassen sich jedoch nicht ohne besondere, zusätzliche Maßnahmen im Erdreich anordnen, da das unter Druck aufgebrachte Erdreich die gewünschte Funktion des Kompensators stark beeinträchtigt wenn nicht gar blockiert. Außerdem ist zu berücksichtigen, daß zum Anbringen der Kompensatoren die mit diesen verbundenen Rohrleitungsenden von der Wärmeisolierung sowie dem Mantel entblößt werden müssen, so daß hier der unmittelbare Kontakt mit dem umgebenden Erdreich sowie vor allem auch der darin enthaltenen Feuchtigkeit zu starken Wärmeverlusten sowie korrodierenden Einflüssen führt, was eine langdauernde Betriebssicherheit unmöglich macht. Daher sind im bekannten Falle die Kompensatoren in der eingangs beschriebenen Weise durch ein Gehäuse gekapselt, wobei die Abdichtung bei möglicher Verschiebbarkeit zwischen Rohrleitungen und Gehäuse das Eindringen von Sand, Erde und Feuchtigkeit in das Gehäuseinnere verhindern soll.

Auch diese Bauweise ist jedoch in hohem Maße unsicher und anfällig gegen Beeinträchtigungen, so daß sie keinen dauerhaften Schutz geben kann, wie er bei erdverlegten Rohrleitungssystemen über viele Jahre oder gar Jahrzehnte gegeben sein muß. So kann zunächst die Abdichtung grundsätzlich nicht das kriechende Eindringen von Feuchtigkeit in den Gehäuseinnenraum verhindern, wo sie im Laufe der Zeit insbesondere in Verbindung mit eingetragenen Salzen zur Korrosion führt, die in besonderem Maße die Schweißverbindung zwischen Kompensator und Rohrleitungen betrifft. Darüber hinaus können im Laufe der Zeit im Zuge der ständigen wärmedehnungsbedingten Relativbewegungen zwischen Gehäuse und Rohrleitungen feinere Erd- und Sandpartikel zwischen die Abdichtung und den Mantel der Rohrleitungen gelangen, wo sie einen scheuernden Einfluß ausüben, durch den sowohl die Abdichtung als auch der Mantel der Rohrleitungen beschädigt bzw. lokal abgetragen werden, so daß die Wirkung der Dichtung allmählich verlorengeht und in vermehrtem Umfange Nässe und später sogar Erdreich in den Gehäuseinnenraum eindringen kann. Dies hat in absehbarer Zeit eine derartige Durchfeuchtung und Verschmutzung des Gehäuseinnenraumes zur Folge, daß sowohl der Kompensator als auch das Gehäuse äußerst starken korrosiven Einflüssen unterworfen sind.

Aufgabe der Erfindung ist es daher, eine Vorrichtung der eingangs genannten Art derart weiter auszubilden, daß ein allen Anforderungen hinsichtlich Entlastung von äußeren Einflüssen genügender Kompensator vorliegt, wobei insbesondere jegliches Eindringen von Feuchtigkeit und/oder Sand bzw. Erdreich mit Sicherheit und auf sehr lange Zeit hin verhindert sein soll. Dabei soll außerdem eine Beeinträchtigung der bestimmungsgemäßen Bewegungsgröße des Kompensators vermieden sein und auch der Einfluß hoher äußerer Belastungen ausgeschaltet sein, wie sie sich beispielsweise aus einem oberhalb des im Erdreich verlegten Leitungssystems befindlichen Schwerlastverkehr ergeben können.

Ausgehend von einer Vorrichtung der eingangs genannten Art, ist diese Aufgabe erfindungsgemäß dadurch gelöst, daß der den Kompensator aufnehmende Gehäuseinnenraum durch wenigstens einen innerhalb der Dichtungsring angeordneten, mit seinen Enden dicht befestigten Balg aus flexiblem, feuchtigkeitsunempfindlichem Werkstoff verschlossen ist.

Durch diese Maßnahme ist sichergestellt, daß der Gehäuseinnenraum absolut gegen Nässe und Verschmutzung abgedichtet ist. Dabei wird die Aufgabe der Abdichtung auf zwei hintereinandergeschaltete, unterschiedliche Dichtungssysteme aufgeteilt, wobei das außen liegende, durch die Dichtungsringe gebildete Dichtungssystem als auf dem Mantel der Rohrleitungen schiebende Dichtung im wesentlichen Erdreich und Sand zurückhält bzw. abstreift, während der innerhalb liegende Balg die absolute Abdichtung gegen das Eindringen von Feuchtigkeit vornehmen kann. Auf diese Weise kann der Balg im Rahmen seiner Bewegbarkeit unbeeinträchtigt den gegenseitigen Bewegungen der beiden Rohrleitungsenden bzw. zwischen Rohrleitungsenden und Gehäuse folgen, wobei der Balg insbesondere nicht mit dem Erdreich in Berührung kommt oder eine sonstige mechanische Berührung hat, die seine freie Bewegbarkeit hemmen oder gar blockieren könnte, Denn dadurch, daß der Balg auf der erdreichabgewandten Seite der Dichtungsringe angeordnet ist, werden durch diese Feststoffeinflüsse praktisch vollständig vom Balg ferngehalten. Was auftretende Nässe bzw. Feuchtigkeit betrifft, können diese den Balg weder in seiner Substanz noch in seiner Bewegbarkeit beeinträchtigen.

Als zweckmäßig hat es sich erwiesen, daß die Dichtungsringe Lippendichtungen sind, deren freies, auf dem Mantel der Rohrleitungen aufliegendes Lippenende nach außerhalb des Gehäuses gerichtet ist. Durch diese Ausbildung wird die Verschmutzungen nach außen abstreifende Wirkung der Dichtungsringe besonders unterstützt, wobei insbesondere der Tendenz entgegengewirkt wird, daß sich Verunreinigungen zwischen den Dichtungsringen und dem Mantel der Rohrleitungen ansammeln.

Was den Balg betrifft, so hat es sich als zweckmäßig erwiesen, daß dieser aus Gummi oder Kunststoff ggf. mit Verstärkungseinlage besteht. Dabei kann entsprechend der besonderen Ausbildung der jeweiligen Konstruktion der Balg als ein- oder mehrfache Rollmanschette ausgebildet sein, es kann jedoch auch ein Faltenbalg in Frage kommen oder sich eine ringförmig umlaufender Rollbalg als zweckmäßig erweisen.

Der Balg kann mit seinen Enden dicht auf dem Mantel der Rohrleitungen festgelegt sein, also den Kompensator einschließlich seiner Verbindung mit den freien Rohrleitungsenden als flexible Hüllwand dicht umgeben, wobei es unerheblich ist, ob der Kompensator ein Axialkompensator, ein Lateralkompensator oder ein Universalkompensator ist. Denn der Balg läßt sich in seiner Gestalt leicht der Form des durch die Kompensatorkonstruktion eingenommenen Raumes anpassen. Was die Festlegung der beiden Balgenden auf dem Mantel betrifft, so kann diese durch Schellen od. dgl. erfolgen. Besonders zweckmäßig ist es jedoch, wenn die beiden Balgenden auf dem Mantel der Rohrleitung aufgeschrumpft sind.

Wird die Erfindung auf einen Axialkompensator angewendet, so ist es besonders zweckmäßig, daß die den als Axialkompensator ausgebildeten Metallbalg umgebende, wärmeisolierende Umhüllung eine hohlzylindrische Hülse, insbesondere aus Polyurethanschaum ist, daß der Außendurchmesser der Hülse etwa dem Außendurchmesser des Mantels der Rohrleitungen entspricht und daß der Balg auf der Außenseite der Hülse anliegt.

Durch diese speziell auf einen Axialkompensator bezogenen Maßnahmen ist auch die wärmeisolierende Ummantelung des Kompensators innerhalb des Balges angeordnet und gleichermaßen gegen äußere Einflüsse geschützt, wobei sie jedoch auf der anderen Seite zur radialen Innenabstützung des Balges dient, wobei sich insbesondere bei einem als ein- oder mehrfache Rollmanschette ausgebildeten Balg eine in Radialrichtung sehr platzsparende Gestaltung ergibt, so daß sich die Kompensationsvorrichtung insgesamt äußerst schlank ausbilden läßt und dabei namentlich im radialen Querschnitt den der Rohrleitung einschließlich der Wärmeisolierung und des Mantels nicht wesentlich überschreitet.

Im beschriebenen Falle ist es zweckmäßig, daß die Enden der Hülse Abstand gegenüber dem Mantel bzw. der Wärmeisolierung der Rohrleitungen haben und daß die freien, mit dem Metallbalg verbundenen Rohrenden von Kunststoffringen, insbesondere aus Polyurethanschaum umgeben sind, die in den Hülsenenden verschiebbar sind.

Für alle Kompensatorbauformen kann jedoch vorteilhafterweise auch vorgesehen sein, daß an jedem Gehäuseende ein Balg angeordnet ist und daß jeder Balg mit einem Ende auf dem Mantel des benachbarten Rohrendes sowie mit dem anderen Ende an der Innenwand des Gehäuses festgelegt ist. Die Anwendung dieser Bauform ist vor allem auch dann möglich und zweckmäßig, wenn durch die Konstruktion des Kompensators bedingt das Gehäuse eine abgewinkelte oder sonstwie unregelmäßige Struktur hat, denn nunmehr ist die Bauform des Balges konstruktiv nur noch von den jeweiligen Gegebenheiten in der Nähe der Gehäuseenden abhängig. Was die Festlegung der Balgenden am Mantel der Rohrleitung bzw. am Gehäuse betrifft, so kann diese mit Hilfe üblicher Techniken geschehen, beispielsweise durch Schweißen, Kleben, Vulkanisation etc.

Für die vorbeschriebene Bauform hat es sich als besonders vorteilhaft, jedoch auch ausreichend erwiesen, daß jeder Balg eine ringförmig umlaufende Balgwelle aufweist, deren Scheitel auf das Gehäuseinnere gerichtet ist. Hiermit ergibt sich eine gegenüber eventuellem äußeren Überdruck besonders tragfähige Bauform.

Darüber hinaus kann neben jedem Balg auf der den Gehäuseenden abgewandten Seite ein Isolierring aus Kunststoff, insbesondere Polyurethanschaum zwischen Gehäuse und Mantel der benachbarten Rohrleitung angeordnet sein, um hier eine eventuelle Wärmebrücke zu vermeiden.

Was das Gehäuse betrifft, so besteht dies zweckmäßigerweise aus Metall. Damit ist eine gegenüber den äußeren Belastungen, insbesondere dem Erddruck stabile Bauform möglich, die andererseits jedoch in besonders vorteilhafter Weise gleichzeitig die Möglichkeit gibt, durch den Kompensator ausgeübte Kräfte abzustützen bzw. zu tragen, worauf nachfolgend noch näher eingegangen wird.

Ferner kann das Gehäuse auf der Außenseite von einer Wärmeisolierung aus Kunststoff, insbesondere Polyurethanschaum mit äußerem Mantel aus Metall oder Kunststoff, insbesondere Ployethylen umgeben sein. Dies gibt die Möglichkeit, auch das Gehäuse aus dem gleichen Grundmaterial herzustellen, aus dem auch die Mantelrohrleitungen bestehen, wobei lediglich von größeren Querschnitten auszugehen ist, so daß das Gehäuse hinsichtlich der an es gestellten Anforderungen den gleichen Bedingungen genügt, denen auch die Mantelrohrleitungen gewachsen sind.

Am Gegenstand der vorstehend beschriebenen Erfindung läßt sich in Weiterbildung die zusätzliche Aufgabe lösen, die vom Kompensator unter Innendruckbelastung ausgeübten Kräfte in einer Weise abzustützen, die das bisher übliche Erfordernis besonders vorgesehener Zuganker überflüssig macht, und zwar für solche Kompensatoren, bei denen die durch diesen verbundenen Rohrleitungen versetzt zueinander parallel oder im Winkel zueinander angeordnet sind.

Die Lösung dieser Aufgabe besteht erfindungsgemäß darin, daß die Rohrleitungsenden an der Gahäuseinnenwand zu sich selbst koaxial geführt verschiebbar gegen die auf sie durch den Kompensator ausgeübten Kräfte abgestützt sind. Durch diese erfindungsgemäßen Maßnahmen wird für die Fälle, bei denen ein den Kompensator umgebendes Gehäuse vorhanden oder notwendig ist, dieses gleichzeitig zur Verankerung des Kompensators herangezogen, so daß die dazu normalerweise verwendeten Verankerungen entfallen können. Im Zusammenhang mit dem Gegenstand der eingangs beschriebenen Erfindung ergibt sich dabei gleichzeitig als besonders vorteilhafte Wirkung, daß die Mantelrohrleitungen auch bei wärmedehnungsbedingten Bewegungen zu sich selbst koaxial gehalten werden können, was mit den bekannten Verankerungen nicht möglich ist, so daß die vorbeschriebene, die Mantelrohrleitungen umgebende Abdichtung des Gehäuseinnenraumes keine Funktionsbeeinträchtigung oder Belastung durch seitlichen Versatz der jeweiligen Mantelrohrleitung erfahren kann, da diese nunmehr nur noch Bewegungen in ihrer Längsrichtung ausführt.

Als zweckmäßig hat es sich hier erwiesen, daß die Abstützung am Gehäuse über eine Gleitführung eines mit den Rohrleitungsenden in fester Verbindung stehenden Stützteiles gegeben ist.

Weitere Merkmale und Einzelheiten der Erfindungen ergeben sich aus der nachfolgenden Beschreibung von auf der Zeichnung dargestellten Ausführungsformen. In der Zeichnung zeigen:

Fig. 1 die Teilansicht eines Axialkompensators im Radialschnitt;
Fig. 2 einen Lateralkompensator im Radialschnitt und
Fig. 3 einen Universalkompensator im Radialschnitt.

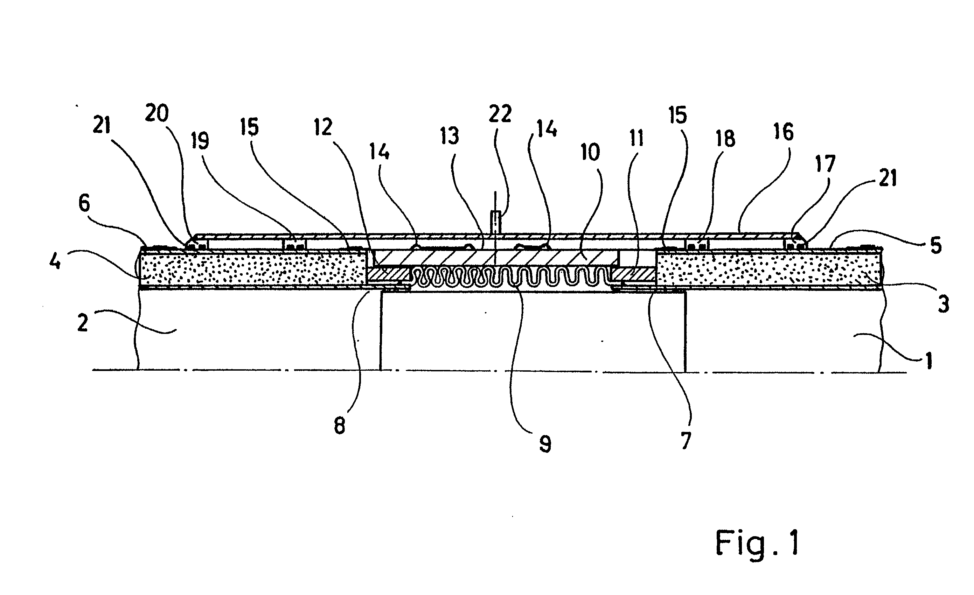

Fig. 1 zeigt zwei Rohrleitungen 1, 2, die mit einer Wärmeisolierung 3, 4 aus Polyurethanschaum versehen sind, welche außen einen Mantel 5, 6 aus Polyethylen trägt. Der Mantel 5, 6 kann auch ein Metallmantel sein. Die Rohrleitungsenden 7, 8 sind von der Wärmeisolierung und dem Mantel befreit und durch einen koaxialen Metallbalg 9 miteinander verbunden, der mit den Rohrleitungsenden 7, 8 verschweißt ist und auf diese Weise einen Axialkompensator darstellt.

Der Metallbalg 9 ist von einer Hülse 10 aus Polyurethanschaum umgeben, deren Außendurchmesser im wesentlichen dem Außendurchmesser des Mantels 5, 6 entspricht. Die Hülse 10 hat in Axialrichtung Abstand gegenüber der Wärmeisolierung und dem Mantel der Rohrleitungen, so daß die wärmedehnungsbedingten Relativbewegungen dieser Teile zueinander möglich sind. Um diese Abstände wärmeübertragungsmäßig zu schließen, sind Kunststoffringe 11, 12, insbesondere aus Polyurethanschaum vorgesehen, die die ummantelungsfreien Rohrleitungsenden 7, 8 umgeben und in den Enden der Hülse 10 verschiebbar sind.

Außen auf der Hülse anliegend ist ein als zweifache Rollmanschette 13 ausgebildeter Balg angeordnet, dessen Enden 15 auf dem Mantel 5, 6 dicht festgelegt sind, beispielsweise durch Schellen, Aufkleben oder Aufschrumpfen des Balgmaterials. In gleicher Weise kann auch die Längsmitte der Rollmanschette auf der Hülse 10 festgelegt sein. Die Rollmanschette 13 ist nach radial innen durch die Hülse 10 abgestützt und kann durch ihre S-förmig hin- und hergeführten Wandungsteile 14 axiale Abstandsänderungen zwischen den Rohrleitungen 1, 2 aufnehmen.

Die insoweit beschriebene Anordnung, Wärmeisolierung und absolute Abdichtung des Kompensators einschließlich der Rohrleitungsenden ist nach außen von einem Metallgehäuse 16 umgeben, das endständig Paare von Querwänden 17 bis 20 aufweist, die auf dem Mantel 5 bzw. 6 unter Zwischenschaltung von Dichtungsringen 21 gleiten und so in erster Stufe Feuchtigkeit, vor allem aber Erdreich od. dgl. vom Innenraum des Gehäuses 16 fernhalten. Damit das Gehäuse 16 nicht aus der dargestellten Position fortwandern kann, ist es über eine Fixierung 22 in nicht näher dargestellter Weise arretiert.

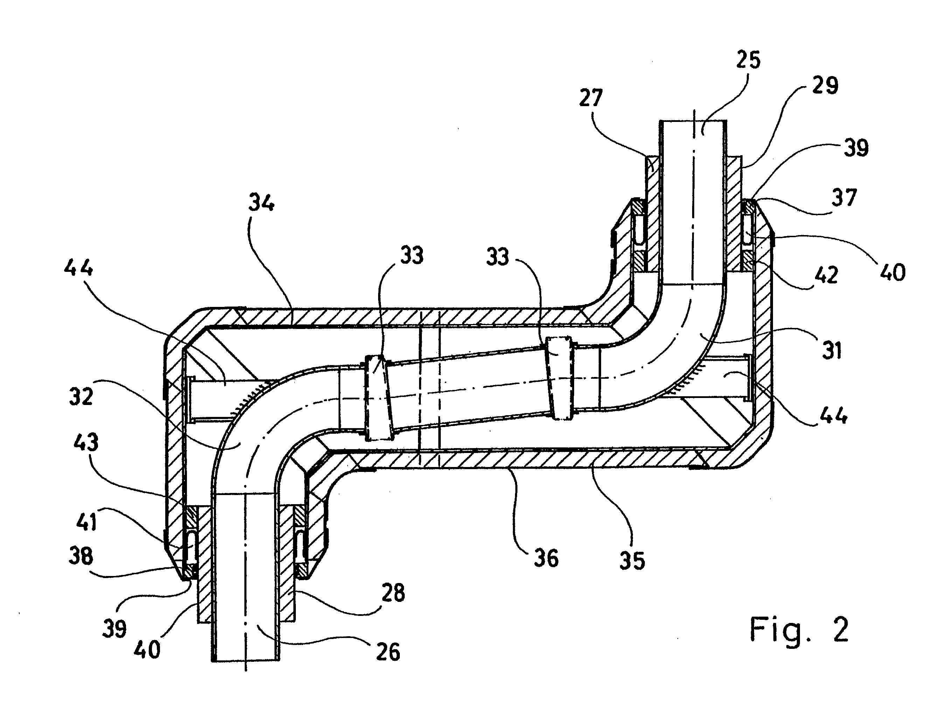

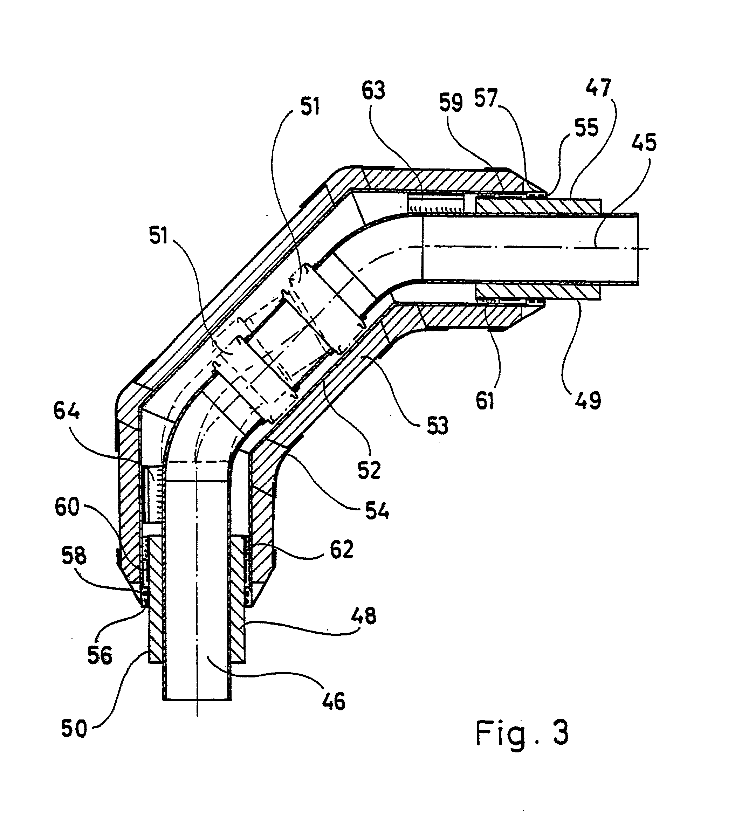

Was die Ausbildung der Dichtungsringe 21 betrifft, so ist deren Gestaltung als Lippendichtung besonders zweckmäßig derart, daß das freie Ende der Lippen auf dem Mantel 5 bzw. 6 aufliegt und nach außerhalb des Gehäuses 16 gerichtet ist. Dies gilt entsprechend auch für die vergleichbaren Dichtungsringe bei den Ausführungsformen gemäß den Fig. 2 und 3 und wird dort nicht noch einmal im einzelnen erwähnt.

Fig. 2 zeigt Rohrleitungen 25, 26 mit Wärmeisolierungen 27, 28 und Mänteln 29, 30 der anhand der Fig. 1 näher beschriebenen Art, die über Krümmer 31, 32 an einen Lateralkompensator angeschlossen sind, der zwei Metallbälge 33 aufweist.

Der Kompensator ist aufgenommen von einem seiner Raumform angepaßten Metallgehäuse 34, das von einer Wärmeisolierung 35 aus Polyurethanschaum umgeben ist, die außen einen Mantel 36 aus Polyethylen aufweist. Auf diese Weise entspricht der Aufbau des Gehäusematerials dem der Mantelrohrleitungen, so daß das Gehäuse aus Abschnitten einer Mantelrohrleitung entsprechend größeren Querschnittes zusammengefügt werden kann und insoweit auch hinsichtlich seiner wärmeisolierenden und sonstigen Gebrauchseigenschaften dem Material der Mantelrohrleitungen entspricht.

Das Gehäuse 34 umfaßt die Mäntel 29, 30 der Rohrleitungen wiederum mit Querwänden 37, 38 unter Zwischenschaltung von Dichtungsringen 39.

Auf der Gehäuseinnenseite sind neben den Querwänden 37, 38 ringförmige Dichtungsbälge 40, 41 angeordnet, deren Scheitel auf das Gehäuseinnere gereichtet sind und deren Enden einerseits auf den Mänteln 29, 30 und andererseits am Gehäuse 34 dicht befestigt sind. Die Bälge 40, 41 können ebenso wie der Balg 13 gemäß Fig. 1 aus Gummi oder Kunststoff ggf. mit einer Verstärkungseinlage bestehen.

Auf der gehäuseinneren Seite der Bäge 40, 41 sind noch Isolierringe 42, 43 insbesondere aus Polyurethanschaum angeordnet, um hier Wärmeverluste zu vermeiden.

Wie Fig. 2 außerdem zeigt, sind mit den Krümmern 31, 32 Stützteile 44 fest verbunden, die auf der Innenwand des Gehäuses 34 parallel zur Achse der benachbarten Rohrleitung 25 bzw. 26 verscheibbar sind. Diese Stützteile übertragen die Kräfte auf das Gehäuse 34, die vom Kompensator bzw. dessen Bälgen 33 bei Innendruckbelastung ausgehen, so daß es zur Aufnahme dieser Kräfte nicht der bekannten Anbringung von Zugankern bedarf, diese vielmehr durch das ohnehin erforderliche Gehäuse 34 ersetzt sind. Ein weiterer wesentlicher Vorteil dieser Abstützung auch gegenüber den bekannten Zugankern besteht darin, daß die Rohrleitungen 25, 26 auch bei wärmedehnungsbedingten Axialverschiebungen immer zu sich selbst koaxial bleiben, so daß sich durch dieses Verschiebebewegung kein Versatz der Rohrleitungen quer zur ihrer Achse ergeben kann, der die Abdichtung zwischen Gehäuse 34 und Mänteln 29 bzw. 30 belasten oder gar beeinträchtigen könnte.

Die Ausführungsform gemäß Fig. 3 zeigt zwei Rohrleitungen 45, 46 mit Wärmeisolierungen 47, 48 und diese umgebenden Mänteln 49, 50, die durch einen Universalkompensator miteinander verbunden sind, welcher zwei Metallbälge 51 aufweist.

Auch hier ist wieder der Kompensator umgeben von einem seiner Bauform angepaßten Metallgehäuse 52 mit Wärmeisolierung 53 und äußerem Mantel 54 sowie abschließenden, auf den Mänteln 49, 50 über Dichtungsringe 55, 56 gleitenden Querwänden 57, 58.

Ebenso wie bereits anhand der Fig. 2 beschrieben, sind auf der Gehäuseinnenseite neben den Querwänden 57, 58 Ringbälge 59, 60 mit ihren Enden dicht auf den Mänteln 49, 50 einerseits und der Innenseite des Gehäuses 52 andererseits festgelegt. Auf deren Innenseit wiederum sitzen Isolierringe 61, 62, insbesondere aus Polyurethanschaum zur Vermeidung von Wärmeverlusten.

In zur Ausführungsform gemäß Fig. 2 vergleichbarer Weise sind ferner mit den Rohrleitungsenden Stützteile 63, 64 fest verbunden, die auf der Innenseite des Gehäuses 52 in zur Achse des benachbarten Rohrendes paralleler Weise verschiebbar in Anlage sind. Aufgabe und Wirkung dieser Abstützung stimmt mit der entsprechenden Abstützung in Fig. 2 überein, weshalb auf die dortigen Erläuterungen Bezug genommen wird.

## Patentansprüche

1. Vorrichtung zum elastischen Verbinden zweier mit einer Wärmeisolierung versehener Mantelrohrleitungen mittels eines zwischen den beiden Rohrenden angeordneten, wenigstens einen Metallbalg aufweisenden Kompensators mit einem diesen und die Rohrenden umgebenden Gehäuse (16, 34, 52), dessen Innenraum gegen Zutritt von außen über in den Gehäuseenden angeordnete Dichtungsringe (21, 39, 55, 56) in auf dem Mantel (5, 6; 29, 30; 49, 50) der Rohrleitungen (1, 2; 25, 26; 45, 46) verschiebbar geführter Weise abgedichtet ist, sowie einer wenigstens den Kompensator umgebenden, wärmeisolierenden Umhüllung aus Kunststoff oder dergleichen, dadurch gekennzeichnet, daß der den Kompensator aufnehmende Gehäuseinnenraum durch wenigstens einen innerhalb der Dichtungsringe (21, 39, 55, 56) angeordneten, mit seinen Enden dicht befestigten Balg (13, 40, 41, 59, 60) aus flexiblem, feuchtigkeitsunempfindlichen Werkstoff verschlossen ist.

2. Vorrichtung nach Anspruch 1, dadurch gekennzeichnet, daß die Dichtungsringe (21, 39, 55, 56) Lippendichtungen sind, deren freies, auf dem Mantel (5, 6; 29, 30; 49, 50) der Rohrleitungen (1, 2; 25, 26; 45, 46) aufliegendes Lippenende nach außerhalb des Gehäuses (16, 34, 52) gerichtet ist.

3. Vorrichtung nach Anspruch 1, dadurch gekennzeichnet, daß der Balg (13, 40, 41, 59, 60) aus Gummi oder Kunststoff ggf. mit Verstärkungseinlage besteht.

4. Vorrichtung nach Anspruch 1, dadurch gekennzeichnet, daß der Balg (13) als ein- oder mehrfache Rollmanschette ausgebildet ist.

5. Vorrichtung nach Anspruch 1, dadurch gekennzeichnet, daß der Balg als Faltenbalg ausgebildet ist.

6. Vorrichtung nach Anspruch 1, dadurch gekennzeichnet, daß der Balg als ringförmig umlaufender Rollbalg (40, 41; 59, 60) ausgebildet ist.

7. Vorrichtung nach Anspruch 1, dadurch gekennzeichnet, daß der Balg (13) mit seinen Enden (15) dicht auf dem Mantel (5, 6) der Rohrleitungen (1, 2) festgelegt ist.

8. Vorrichtung nach Anspruch 7, dadurch gekennzeichnet, daß die Balgenden (15) auf dem Mantel (5, 6) aufgeschrumpft sind.

9. Vorrichtung nach Anspruch 7 oder 8, dadurch gekennzeichnet, daß die den als Axialkompensator ausgebildeten Metallbalg (9) umgebende wärmeisolierende Umhüllung eine hohlzylindrische Hülse (10), insbesondere aus Polyurethanschaum ist, daß der Außendurchmesser der Hülse etwa dem Außendurchmesser des Mantels (5, 6) der Rohrleitungen (1, 2) entspricht und daß der Balg (13) auf der Außenseite der Hülse anliegt.

10. Vorrichtung nach Anspruch 9, dadurch gekennzeichnet, daß die Enden der Hülse (10) Abstand gegenüber dem Mantel (5, 6) bzw. der Wärmeisolierung (3, 4) der Rohrleitungen (1, 2) haben und daß die freien, mit dem Metallbalg (9) verbundenen Rohrenden (7, 8) von Kunststoffringen (11, 12), insbesondere aus Polyurethanschaum umgeben sind, die in den Hülsenenden verschiebbar sind.

11. Vorrichtung nach Anspruch 1, dadurch gekennzeichnet, daß an jedem Gehäuseende ein Balg (40, 41; 59, 60) angeordnet ist und daß jeder Balg mit einem Ende auf dem Mantel (29, 30; 49, 50) des benachbarten Rohrendes sowie mit dem anderen Ende an der Innenwand des Gehäuses (34, 52) festgelegt ist.

12. Vorrichtung nach Anspruch 11, dadurch gekennzeichnet, daß jeder Balg (40, 41; 59, 60) eine ringförmige umlaufenden Balgwelle aufweist, deren Scheitel auf das Gehäuseinnere gerichtet ist.

13. Vorrichtung nach Anspruch 11 oder 12, dadurch gekennzeichnet, daß neben jedem Balg (40, 41; 59, 60) auf der den Gehäuseenden abgewandten Seite ein Isolierring (42, 43; 61, 62) aus Kunststoff, insbesondere Polyurethanschaum zwischen Gehäuse (34, 52) und Mantel (29, 30; 49, 50) der benachbarten Rohrleitung angeordnet ist.

14. Vorrichtung nach einem der vorhergehenden Ansprüche, dadurch gekennzeichnet, daß das Gehäuse (16, 34, 52) aus Metall besteht.

15. Vorrichtung nach einem der vorhergehenden Ansprüche, dadurch gekennzeichnet, daß das Gehäuse (34, 52) auf der Außenseite von einer Wärmeisolierung (35, 53) aus Kunststoff, insbesondere Polyurethanschaum mit äußerem Mantel (36, 54) aus Metall oder Kunststoff, insbesondere Polyethylen umgeben ist.

16. Vorrichtung nach einem der vorhergehenden Ansprüche mit zueinander versetzt parallel oder im Winkel zueinander angeordneten Rohrleitungen, dadurch gekennzeichnet, daß die Rohrleitungsenden an der Gehäuseinnenwand zu sich selbst koaxial geführt verschiebbar gegen die auf sie durch den Kompensator ausgeübten Kräfte abgestützt sind.

17. Vorrichtung nach Anspruch 16, dadurch gekennzeichnet, daß die Abstützung am Gehäuse (34, 52) über eine Gleitführung eines mit den Rohrleitungsenden in fester Verbindung stehenden Stützteiles (44, 63, 64) gegeben ist.

**Claims**

1. Device for the elastic connection of two jacketed pipes that are provided with heat insulation, by means of an expansion joint that is arranged between the two pipe ends and has at least one metal bellows, with a housing (16, 34, 52) that surrounds the expansion joint and the pipe ends, the interior of the housing being sealed against access from the outside by means of sealing rings (21, 39, 55, 56) arranged in the ends of the housing in such a manner that it is displaceable on the jacket (5, 6; 29, 30; 49, 50) of the pipes (1, 2; 25, 26; 45, 46), and with a heat-insulating covering of plastics or the like which surrounds at least the expansion joint, characterised in that the interior of the housing accommodating the expansion joint is sealed by at least one bellows (13, 40, 41, 59, 60) of flexible, moisture-insensitive material, which bellows is arranged inside the sealing rings (21, 39, 55, 56) and is affixed tightly by its ends.

2. Device according to claim 1, characterized in that the sealing rings (21, 39, 55, 56) are lip seals of which the free lip end that rests against the jacket (5, 6; 29, 30; 49, 50) of the pipes (1, 2; 25, 26; 45, 46) is directed towards the outside of the housing (16, 34, 52).

3. Device according to claim 1, characterised in that the bellows (13, 40, 41, 59, 60) consists of rubber or plastics, optionally with a reinforcing insert.

4. Device according to claim 1, characterised in that the bellows (13) is constructed in the form of a single or multiple roll collar.

5. Device according to claim 1, characterised in that the bellows is constructed in the form of a folding bellows.

6. Device according to claim 1, characterised in that the bellows is constructed in the form of an annular roll bellows (40, 41; 59, 60).

7. Device according to claim 1, characterised in that the bellows (13) is fixed by its ends (15) tightly on the jacket (5, 6) of the pipes (1, 2).

8. Device according to claim 7, characterised in that the ends (15) of the bellows are shrunk onto the jacket (5, 6).

9. Device according to claim 7 or 8, characterised in that the heat-insulating covering, which surrounds the metal bellows (9) constructed as an axial expansion joint, is a hollow cylindrical sleeve (10), especially of polyurethane foam, the outer diameter of the sleeve corresponds approximately to the outer diameter of the jacket (5, 6) of the pipes (1, 2), and the bellows (13) rests against the outer side of the sleeve.

10. Device according to claim 9, characterised in that the ends of the sleeve (10) are at a distance from the jacket (5,6) and the heat insulation (3, 4) of the pipes (1, 2), and the free pipe ends (7, 8) that are connected by the metal bellows (9) are surrounded by plastics rings (11, 12), especially of polyurethane foam, which can be displaced in the ends of the sleeve.

11. Device according to claim 1, characterised in that a bellows (40, 41; 59, 60) is arranged at each end of the housing, and each bellows is fixed by one end to the jacket (29, 30; 49, 50) of the adjacent pipe end and by the other end to the inner wall of the housing (34, 52).

12. Device according to claim 11, characterised in that each bellows (40, 41; 59, 60) has an annular bellows corrugation the peak of which is directed towards the interior of the housing.

13. Device according to claim 11 or 12, characterised in that close to each bellows (40, 41; 59, 60) on the side remote from the ends of the housing, an insulating ring (42, 43; 61, 62) of plastics, especially polyurethane foam, is arranged between the housing (34, 52) and the jacket (29, 30; 49, 50) of the adjacent pipe.

14. Device according to any one of the preceding claims, characterised in that the housing (16, 34, 52) consists of metal.

15. Device according to any one of the preceding claims, characterised in that the housing (34, 52) is surrounded on the outside by heat insulation (35, 53) of plastics, especially polyurethane foam, having an outer jacket (36, 54) of metal or plastics, especially polyethylene.

16. Device according to any one of the preceding claims having pipes arranged in parallel and staggered relative to one another or arranged at an angle to one another, characterised in that the pipe ends are supported against the forces exerted on them by the expansion joint in such a manner that they can be displaced and are guided along their respective axes on the inner wall of the housing.

17. Device according to claim 16, characterised in that the support on the housing (34, 52) is provided by a sliding support member guide (44, 63, 64) that is rigidly connected to the pipe ends.

## Revendications

1. Dispositif pour relier élastiquement deux conduits tubulaires à gaines, pourvus d'une isolation thermique, au moyen d'un compensateur disposé entre les deux extrémités de tubes et comportant au moins un soufflet métallique avec un carter (16, 34, 52) entourant celui-ci et les extrémités de tubes et dont l'étanchéité du volume intérieur par rapport à l'extérieur est assurée par l'intermédiaire de bagues d'étanchéité (21, 39, 55, 56), disposées dans les extrémités de carter de manière à être guidées en translation sur les gaines (5, 6; 29, 30; 49, 50) des conduits tubulaires (1, 2; 25, 26; 45, 46), ainsi qu'une enveloppe en matière plastique thermiquement isolante ou analogue, qui entoure au moins le compensateur, caractérisé en ce que le volume intérieur de carter recevant le compensateur est obturé par au moins un soufflet (13, 40, 41, 59, 60), formé d'un matériau flexible et insensible à l'humidité, disposé à l'intérieur des bagues d'étanchéité (21, 39, 55, 56) et fixé de façon étanche par ses extrémités.

2. Dispositif selon la revendication 1, caractérisé en ce que les bagues d'étanchéité (21, 39, 55, 56) sont des joints d'étanchéité à lèvres dont l'extrémité libre de lèvre, s'appliquant contre la gaine (5, 6; 29, 30, 49, 50) des conduits tubulaires (1, 2; 25, 26; 45, 46) est dirigée vers l'extérieur du carter (16, 34, 52).

3. Dispositif selon la revendication 1, caractérisé en ce que le soufflet (13, 40, 41, 59, 60) se compose de caoutchouc ou d'une matière plastique, le cas échéant avec des inserts de renforcement.

4. Dispositif selon la revendication 1, caractérisé en ce que le soufflet (13) est agencé comme une manchette enroulable simple ou multiple.

5. Dispositif selon la revendication 1, caractérisé en ce que le soufflet est agencé comme un soufflet plissé.

6. Dispositif selon la revendication 1, caractérisé en ce que le soufflet est agencé comme un soufflet enroulable (40, 41; 59, 60) qui s'enroule avec une forme annulaire.

7. Dispositif selon la revendication 1, caractérisé en ce que le soufflet (13) est appliqué par ses extrémités (15) de façon étanche contre la gaine (5, 6) des conduits tubulaires (1, 2).

8. Dispositif selon la revendication 7, caractérisé en ce que les extrémités de soufflet (15) sont rétreintes sur la gaine (5, 6).

9. Dispositif selon la revendication 7 ou 8, caractérisé en ce que l'enveloppe thermiquement isolante, entourant le soufflet métallique (9) agencé comme un compensateur axial, est un fourreau cylindrique creux (10), notamment formé de mousse et de polyuréthane, en ce que le diamètre extérieur de fourreau correspond é peu près au diamètre extérieur de la gaine (5, 6) des conduits tubulaires (1, 2) et en ce que le soufflet (13) s'applique contre le côté extérieur du fourreau.

10. Dispositif selon la revendication 9, caractérisé en ce que les extrémités du fourreau (10) sont espacées de la gaine (5, 6) ou de l'isolation thermique (3, 4) des conduits tubulaires (1, 2) et en ce que les extrémités libres de tubes (7, 8) reliées au soufflet métallique (9), sont entourées par des bagues en matière plastique (11, 12), notamment en mousse de polyuréthane, qui sont déplaçables en translation dans les extrémités du fourreau.

11. Dispositif selon la revendication 1, caractérisé en ce qu'il est prévu à chaque extrémité du carter un soufflet (40, 41; 59, 60) et en ce que chaque soufflet est fixé par une extrémité sur la gaine (29, 30; 49, 50) de l'extrémité adjacente de tube et par son autre extrémité sur la paroi intérieure du carter (34, 52).

12. Dispositif selon la revendication 11, caractérisé en ce que chaque soufflet (40, 41; 59, 60) comporte une ondulation périphérique de forme annulaire dont le sommet est dirigé vers l'intérieur du carter.

13. Dispositif selon la revendication 11 ou 12, caractérisé en ce qu'il est prévu à côté de chaque soufflet (40, 41; 59, 60), sur le côté opposé aux extrémités du carter, une bague isolante (42, 43; 61, 62) en matière plastique, notamment en mousse de polyuréthane, entre le carter (34, 52) et la gaine (29, 30; 49, 50) du conduit tubulaire adjacent.

14. Dispositif selon une des revendications précédentes, caractérisé en ce que le carter (16, 34, 52) est formé d'un métal.

15. Dispositif selon une des revendications précédentes, caractérisé en ce que le carter (34, 52) est entouré, sur le côté extérieur, par une isolation thermique (35, 53) en matière plastique, notamment en mousse de polyuréthane, pourvue d'une enveloppe extérieure (36, 54) en métal ou en matière plastique, notamment en polyéthylène.

16. Dispositif selon une des revendications précédentes, comportant des conduits tubulaires disposés parallèlement avec décalage mutuel ou inclinés l'un par rapport à l'autre, caractérisé en ce que les extrémités des conduits tubulaires sont guidées coaxialement sur la paroi intérieure du carter et sont déplaçables en étant soutenues contre des forces exercées sur elles par le compensateur.

17. Dispositif selon la revendication 16, caractérisé en ce que le support contre le carter (34, 52) est assuré par l'intermédiaire d'un guidage en glissement d'une partie d'appui (43, 63, 64) reliée rigidement avec les extrémités des conduits tubulaires.

Fig. 1

EP 0 229 345 B1

Fig. 2

EP 0 229 345 B1

Fig. 3